# EUROPEAN PATENT SPECIFICATION

(11) **EP 0 877 892 B1**
(45) Date of publication and mention of the grant of the patent: **24.11.1999**
(21) Application number: 97902439.5
(22) Date of filing: 03.02.1997
(51) Int. Cl.: F16L 59/02

(54) **HEAT REFLECTIVE SLEEVE**
WÄRMEREFLEKTIERENDE HÜLSE
MANCHON REFLECHISSANT LA CHALEUR

(30) Priority: 06.02.1996 US 595975
(43) Date of publication of application: 18.11.1998
(73) Proprietor: Federal-Mogul Systems Protection Group Inc., Exton, Pennsylvania 19341 (US)
(72) Inventor: BRUSHAFER, Robert, J., West Chester, PA 19382 (US)
(74) Representative: Crux, John Anthony
(86) International application number: GB9700285
(87) International publication number: WO9729316

(56) References cited:
- WO-A-90/09281
- DE-U- 9 107 484

## Description

### Field of Invention

This invention relates to sleeving products including a heat reflective component and more particularly to sleeving products for insulating a high temperature heat source, such as an automotive exhaust gas recirculation tube.

### Background of the Invention

Various efforts have been made to provide relatively low cost, light-weight insulating sleeving for the purposes of insulating high-heat generating components, such as exhaust gas recirculation tubes. In a modern automobile, the latest versions of these devices operate with inlet gas temperatures ranging from above 1000°F (540°C) to about 1800°F (980°C). The devices generate considerable heat which can be uncomfortable to the occupants within the passenger compartment and may damage nearby mechanical components, floor covering materials and the like and may even result in fire if the automobile is left idling when parked over dry grass.

A problem exists in dealing with these temperatures in that presently available insulating materials do not tolerate the high temperatures likely to be encountered very well. At best, they tend to degrade relatively rapidly. At the high end of the temperature range mentioned above, materials such as glass fibre insulating materials will melt. At present, no reasonably priced, low cost alternative has been found to be entirely satisfactory for this application.

Although sleevings having means providing an air space between the heat source and the insulating materials have been effectively utilised for many applications, an as yet unsatisfied need persists for a cost effective insulation sleeve for high temperature devices for use in modern high performance vehicles.

### Summary and Objects of the Invention

According to the invention, an insulating sleeve product is provided which comprises an inner tubular spacer layer of a light-weight metal mesh, which layer is generally conformable to the outer surface of the heat generating component. The invention provides a layer of foil having a reflective face which is spaced from the heat generating component by the layer of metallic mesh. Preferably, the reflective layer is surrounded by a sheet-like layer of a refractory material having a low thermal conductivity, such as rockwool, or like mineral material in paper-like sheet form, and desirably has at least one more metal mesh layer surrounding the layer of low thermal conductivity in order to provide a supplemental air space and to hold the refractory layer in place after any binders have burned off. A product formed according to the invention desirably has a layer of silicone resin applied over the outermost metal mesh layer in order to adhere the inner layers to an outer cover of glass fibre yarn. The silicone resin layer has the further advantages of eliminating end fray, prevention of the inner layers from abrading the cover layer and also and importantly serves to absorb vibrational energy.

In carrying out the invention, the inner metallic mesh spacing layer is preferably knitted wire and the knitted mesh layer should be open enough to expose the majority of the surface area of the reflective foil face to the heat source while maintaining the foil face out of contact with the surface of the device. On account of the mesh spacing layer, radiation rather than conduction becomes the primary mode of heat transfer.

More particularly, the relatively fragile foil layer is preferably laminated to the mineral wood paper layer prior to construction of the sleeve. Since the need for adhesion between the paper and the foil exists only during assembly, inexpensive adhesives which may burn off during use are suitable for the purpose. Once the sleeving product is placed in use, the outer layers of mesh, silicone resin and insulating yarn serve as the primary means to maintain the inner layers in place.

For even higher performance sleeves, additional layers of mesh, foil and rockwool paper are desirably added in order to enhance the insulating effect.

With the foregoing in view, a primary objective of the invention is the provision of high performance heat insulating sleeving of light-weight construction useful for the insulation of high temperature exhaust gas recirculation products.

How the foregoing and other objects of the invention are achieved will become apparent from the following detailed description of a preferred embodiment of the invention.

### Brief Description of the Drawings

Figure 1 is a sectional view of a first form of sleeving product formed in accordance with the invention;
Figure 2 is a sectional view of an alternative form of sleeving product of the invention; and
Figure 3 is a schematic view of apparatus used in the manufacture of the sleeve of Figure 1.

### Detailed Description of the Preferred Embodiment

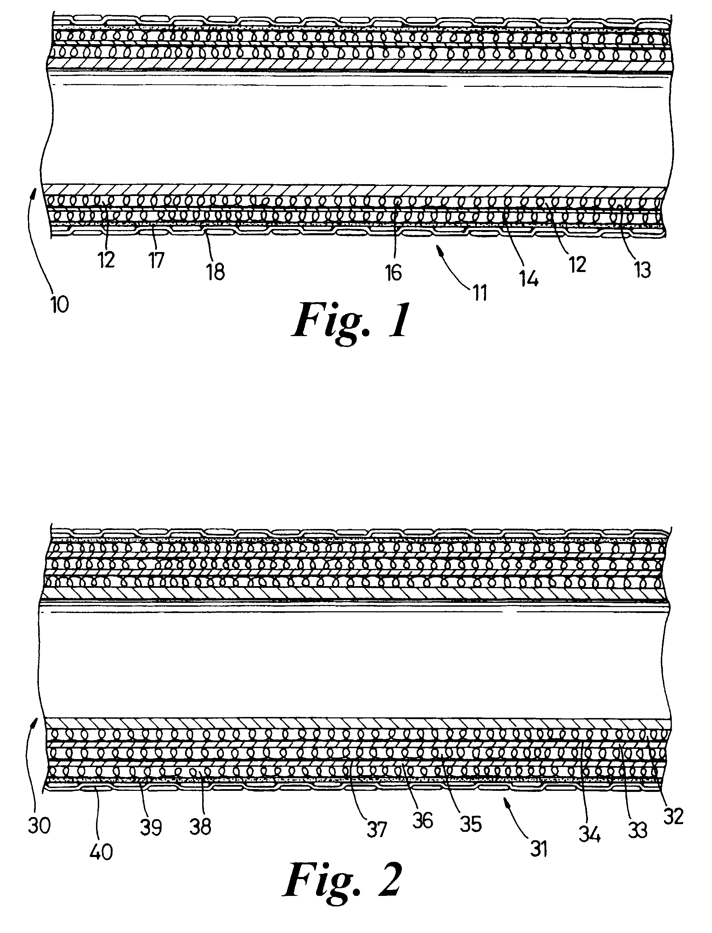

With reference to Figure 1, an exhaust gas recirculation device shown generally at 10 is provided with a thermally insulating sleeve 11 made according to the invention. Sleeve 11 comprises a first, inner support layer 12, preferably formed of metallic mesh consisting of knitted wire having a diameter of about .006 inches (0,152 mm). Preferably, the wire is a stainless steel wire which effectively withstands tube temperatures of 1800°F (980°C) and is loosely knitted. Other wire materials may be employed depending upon the temperature conditions encountered, as will be apparent to those of ordinary skill in the art. Preferably, the wire is knitted in a relatively open knit in order to minimise the surface contact with the tube and a foil layer 13. In the preferred embodiment, the knit wire layer 12 has an overall thickness of about .012 inches. The knit wire layer 12 provides support for the layer of metallic foil 13 of a thickness of about .001 inches (0,0254 mm) which has a reflective surface which faces the heat generating component.

As noted above, the wire mesh layer is knitted with a relatively open stitch so that a majority of the foil surface area is exposed to the heat source and is maintained out of contact therewith. The foil layer is surrounded by a paper layer 14 consisting essentially of a low thermally conductive material, such as rockwool or the like mineral-based material, and is preferably in sheet form. Refractory papers in which the mineral-based material is rockwool having a thickness of about 2mm are preferred. Conveniently, the foil layer may be laminated to the rockwool paper prior to fabrication of the sleeve using any suitable, flexible adhesive. Once the adhesive has served its purpose during assembly, it will be driven off by the temperatures to which the sleeve is exposed.

Preferably, the layer of sheet material of low conductivity is followed by a second mesh layer 16. Mesh layer 16 is similarly constructed to layer 12 being comprised of knitted stainless steel wire and is of open construction. The wire preferably has a diameter of about 6 mils and the layer has an overall thickness of about .012 inches (0,305 mm). Second mesh layer 16 holds the rockwool in place after binders and adhesives have been burned off and provides an additional air space which reduces heat transfer to the outer layers. The sleeve illustrated in Figure 1 further includes a layer of silicone resin indicated at 17 and an outermost cover layer 18 formed of knitted or braided insulating material, such as three ends of continuous filament E-glass yarn of 3608 denier each. Silicone resin layer 17 adheres the inner layers and to the outermost cover layer, further eliminates end fray of the glass in the cover layer 18, serves to prevent the inner layers of the sleeve from abrading the glass and further and importantly absorbs vibrational energy. A preferred material for the silicone resin layer 17 is a product manufactured by Dow Chemical and identified as Dow LPS 590. The braided E-glass layer provides an additional thermal barrier and is preferably coated with a high temperature coating material, such as epoxy/silicone resin. The multiple layers of the resulting sleeve typically have a thickness of about .15 inches (3,81 mm).

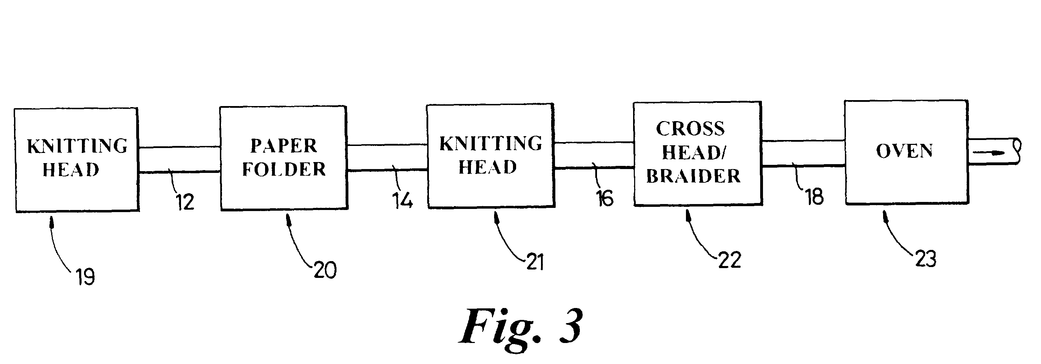

In the manufacture of the product, with reference to Figure 3, the stainless steel wire mesh support layer 12 is preferably knitted on a circular knitter 19. The mesh tube so formed is then placed in a paper folder 20 which wraps the layer of rockwool paper 14 which is supplied as a laminate with a foil interface with the foil 13 facing inwardly over the mesh tube. As the material leaves the folder 20, it is delivered through a knitting head 21 where a second layer of stainless steel wire 16 is knitted over the materials holding them in place. This completes the core tube which is taken to a braider 22 where it is delivered through a cross head which applies a layer of silicone resin immediately under the braiding point. The sleeve is then overbraided with a covering layer of glass fibre 18, passed through a heating chamber 23 to cure the silicone resin and to burn off binders in the glass. Preferably, the sleeve is then coated with a high temperature coating, such as an epoxy/silicone resin in a standard coating tower.

Referring now to Figure 2, a second form of sleeve is illustrated incorporating the principles of the invention and having three knit wire spacer/support layers. In Figure 2, the exhaust gas recirculation tube is illustrated schematically by the numeral 30. The tube has applied thereto a sleeve 31 comprised of an inner support or spacer layer 32 preferably formed of stainless steel wire knit mesh. Preferably, the stainless steel wire has a diameter of about 11 mils, and overall thickness of the layer is about .022 inches (0,559 mm). The second layer comprises a rockwool paper layer 33 of a thickness of about 2mm to which a 1 mil aluminium foil layer 34 has been laminated to the outer surface. The next layer of the sleeve is a second stainless steel knit mesh layer indicated at 35, the knit mesh preferably being made of wire having a diameter of about 6 mils with an overall thickness of the mesh being about .012 inches (0,305 mm). Following this layer is a second 2mm thick rockwool paper layer 36 having a 1 mil aluminium foil layer 37 laminated to its inner surface. The second rockwool paper layer 36 is retained in place by a third stainless steel wire knit mesh layer 38 formed of wire having a diameter of about 6 mils. A silicone resin coating layer 39 and an outer layer of a braided insulating material, such as E-glass yarn of the kind used in the first embodiment, is provided as cover, as indicated at 40. The glass outer covering preferably has a coating layer of an epoxy/silicone resin applied thereto.

Similarly to the first embodiment, the first wire knit mesh support layer gives the sleeve a strong, durable core and reduces heat transfer by conduction or a convection. The paper layer substantially reduces conduction heat transfer, supports the foil and reduces the temperature to which the foil is exposed. The two layers of foil substantially reduce radiation, the inner layer emitting less heat and the outer layer reflecting heat. The next layer of mineral wool paper serves to further reduce heat transfer by conduction. This embodiment meets the requirements of a surface temperature in the range of 250°F to 300°F (122°C to 150°C) at gas temperatures of 1800°F (980°C) at the inlet of the recirculation device.

In use, sleeves made according to the present invention have a substantial thermal advantage over currently known alternatives. For example, braided glass fibre sleeving having a coating of high temperature resin was placed over an internal flow heat source with an inlet gas temperature of 1400°F (760°C) with gas flowing at 5 cfm. The sleeve surface temperature was measured at 642°F (320°C). A similar product differing in that internally disposed crossing spiral standoff beads maintained the sleeve out of direct contact with the internal flow heat source resulted in a sleeve surface temperature of about 531°F (275°C). A still further sleeve like the sleeves mentioned just above but having four internal warp beads standing the sleeve off from the heat source resulted in a surface temperature of about 519°F (270°C). The sleeve of the first embodiment of this invention was measured as having a surface temperature of about 323°F (163°C) under the same conditions. Like results to the above are obtained with the sleeve of the second embodiment when placed over an internal flow heat source operating under the same conditions.

## Claims

1. A sleeve for the insulation of an exhaust gas recirculation device or like substantially tubular heat generating component, said sleeve comprising:
an inner support layer of metallic mesh material, said inner support layer being conformable to said heat generating component;
a reflective layer supported by said inner support layer, said reflective layer being flexible and having a reflective surface facing said heat generating component; and
a cover layer of a thermally insulating material surrounding said reflective layer.

2. A sleeve according to claim 1, wherein said inner support layer comprises an interlaced mesh material.

3. A sleeve according claim 2, wherein said interlaced mesh material is stainless steel wire.

4. A sleeve according claim 3, wherein said interlaced knitted mesh material is stainless steel wire.

5. A sleeve according to claim 2, wherein said layer of thermally insulating material is comprised of glass fibre yarn.

6. A sleeve according of claim 5, wherein said glass fibre yarn is braided.

7. A sleeve according to claim 5, wherein said glass fibre yarn is knitted.

8. A sleeve according to claim 6, wherein said glass fibre yarn is E-glass.

9. A sleeve according to claim 1, wherein said reflective layer comprises a metallic foil.

10. A sleeve according to claim 9, wherein said metallic foil layer is aluminium foil having a thickness of about .001 inches (0,0254 mm).

11. A sleeve according to claim 1, further including a second metallic mesh layer supporting said cover layer, said reflective layer being sandwich between said inner support layer and said second metallic mesh layer.

12. A sleeve according to claim 11, further including a layer of sheet rockwool interposed between said reflective layer and said metallic mesh layer.

13. A sleeve according to claim 12, further including a silicone layer between said second metallic mesh layer and said cover layer.

14. A sleeve according to claim 8, further including a second metallic mesh layer, said reflective layer comprising a foil and being sandwich between said inner support layer and said second metallic mesh layer.

15. A sleeve according to claim 14, further including a layer of a material having a low thermal conductivity interposed between said reflective layer and said second metallic mesh layer.

16. A sleeve according to claim 15, wherein said foil layer has a thickness of about .001 inches (0,0254 mm) and wherein said first and second metallic mesh layers comprise knitted stainless steel wire, said wire having a diameter of about .006 inches (0,152 mm).

17. A sleeve according to claim 15, wherein the material having a low thermal conductivity is a refractory paper.

18. A sleeve according to claim 17, wherein said refractory paper consists essentially of rockwool and a binder.

## Patentansprüche

1. Hülle für die Isolation einer Abgas-Umleitungsvorrichtung oder einer vergleichbaren, im wesentlichen rohrförmigen, wärmeerzeugenden Komponente, wobei die Hülle aufweist:
eine innere Halteschicht aus metallischem Maschenmaterial, wobei die innere Halteschicht an die wärmeerzeugende Komponente anpaßbar ist;
eine reflektierende Schicht, die durch die innere Halteschicht getragen wird, wobei die reflektierende Schicht biegbar bzw. flexibel ist und eine reflektierende Oberfläche hat, die der wärmeerzeugenden Komponente gegenüberliegt;
eine Deckschicht aus einem thermisch isolierenden Material, die die reflektierende Schicht umgibt.

2. Hülle nach Anspruch 1, wobei die innere Halteschicht ein verschachteltes bzw. verwobenes Maschenmaterial aufweist.

3. Hülle nach Anspruch 2, wobei das verschachtelte Maschenmaterial rostfreier Stahldraht ist.

4. Hülle nach Anspruch 3, wobei das verschachtelte gewirkte Maschenmaterial rostfreier Stahldraht ist.

5. Hülle nach Anspruch 2, wobei die Schicht aus thermisch isolierendem Material Glasfaser-Garn aufweist.

6. Hülle nach Anspruch 5, wobei das Glasfaser-Garn geflochten ist.

7. Hülle nach Anspruch 5, wobei das Glasfaser-Garn gewirkt ist.

8. Hülle nach Anspruch 5, wobei das Glasfaser-Garn E-Glas ist.

9. Hülle nach Anspruch 1, wobei die reflektierende Schicht eine metallische Folie aufweist.

10. Hülle nach Anspruch 9, wobei die metallische Folienschicht Aluminiumfolie ist mit einer Dicke von etwa 0,001 Inch (0,0254 mm).

11. Hülle nach Anspruch 1, ferner aufweisend eine zweite metallische Maschenschicht, die die Deckschicht trägt, wobei die reflektierende Schicht sandwichartig aufgenommen ist zwischen der inneren Halteschicht und der zweiten metallischen Maschenschicht.

12. Hülle nach Anspruch 11, ferner aufweisend eine Schicht aus Blatt-Steinwolle, die zwischen der reflektierenden Schicht und der metallischen Maschenschicht zwischengelagert ist.

13. Hülle nach Anspruch 12, ferner aufweisend eine Silikonschicht zwischen der zweiten metallischen Maschenschicht und der Deckschicht.

14. Hülle nach Anspruch 8, ferner aufweisend eine zweite metallische Maschenschicht, wobei die reflektierende Schicht eine Folie aufweist und sandwichartig zwischengelagert ist zwischen der inneren Halteschicht und der zweiten metallischen Maschenschicht.

15. Hülle nach Anspruch 14, ferner aufweisend eine Schicht aus einem Material mit einer geringen thermischen Leitfähigkeit, das zwischengelagert ist zwischen der reflektierenden Schicht und der zweiten metallischen Maschenschicht.

16. Hülle nach Anspruch 15, wobei die Folienschicht eine Dicke von etwa 0,001 Inch (0,0254 mm) hat und wobei die erste und die zweite metallische Maschenschicht gewirkten rostfreien Stahldraht aufweisen, wobei der Draht einen Durchmesser von etwa 0,006 Inch (0,152 mm) hat.

17. Hülle nach Anspruch 15, wobei das Material mit einer geringen thermischen Leitfähigkeit feuerfestes Papier ist.

18. Hülle nach Anspruch 17, wobei das feuerfeste Papier im wesentlichen aus Steinwolle und einem Binder besteht.

## Revendications

1. Manchon pour l'isolation d'un dispositif de remise en circulation de gaz d'échappement ou d'un organe de production de chaleur sensiblement tubulaire, analogue, ledit manchon comprenant :
une couche de support interne de matériau de treillis métallique, ladite couche de support interne étant adaptée à épouser ledit organe de production de chaleur ;
une couche réfléchissante supportée par ladite couche de support interne, ladite couche réfléchissante étant flexible et comportant une surface réfléchissante donnant sur ledit organe de production de chaleur ; et
une couche de couverture d'un matériau d'isolation thermique entourant ladite couche réfléchissante.

2. Manchon selon la revendication 1, dans lequel ladite couche de support interne comprend un matériau de treillis entrelacé.

3. Manchon selon la revendication 2, dans lequel ledit matériau de treillis entrelacé est du fil d'acier inoxydable.

4. Manchon selon la revendication 3, dans lequel ledit matériau de treillis tricoté entrelacé est du fil d'acier inoxydable.

5. Manchon selon la revendication 2, dans lequel ladite couche de matériau d'isolation thermique est composée de fil de verre textile.

6. Manchon selon la revendication 5, dans lequel ledit fil de verre textile est tressé.

7. Manchon selon la revendication 5, dans lequel ledit fil de verre textile est tricoté.

8. Manchon selon la revendication 6, dans lequel ledit fil de verre textile est du verre non-alcalin.

9. Manchon selon la revendication 1, dans lequel ladite couche réfléchissante comprend une feuille métallique.

10. Manchon selon la revendication 9, dans lequel ladite couche de feuille métallique est une feuille d'aluminium ayant une épaisseur d'environ 0,001 pouce (0,0254 mm).

11. Manchon selon la revendication 1, comprenant, en outre, une deuxième couche de treillis métallique supportant ladite couche de couverture, ladite couche réfléchissante étant prise en sandwich entre ladite couche de support interne et ladite deuxième couche de treillis métallique.

12. Manchon selon la revendication 11, comprenant, en outre, une couche de laine de roche en feuille intercalée entre ladite couche réfléchissante et ladite couche de treillis métallique.

13. Manchon selon la revendication 12, comprenant, en outre, une couche de silicone entre ladite deuxième couche de treillis métallique et ladite couche de couverture.

14. Manchon selon la revendication 8, comprenant, en outre, une deuxième couche de treillis métallique, ladite couche réfléchissante comprenant une feuille métallique et étant prise en sandwich entre ladite couche de support interne et ladite deuxième couche de treillis métallique.

15. Manchon selon la revendication 14, comprenant, en outre, une couche d'un matériau ayant une faible conductivité thermique intercalée entre ladite couche réfléchissante et ladite deuxième couche de treillis métallique.

16. Manchon selon la revendication 15, dans lequel ladite couche de feuille métallique a une épaisseur d'environ 0,001 pouce (0,0254 mm) et dans lequel lesdites première et deuxième couches de treillis métallique comprennent du fil d'acier inoxydable tricoté, ledit fil ayant un diamètre d'environ 0,006 pouce (0,152 mm).

17. Manchon selon la revendication 15, dans lequel le matériau ayant une faible conductivité thermique est un papier réfractaire.

18. Manchon selon la revendication 17, dans lequel ledit papier réfractaire consiste essentiellement en laine de roche et en un liant.
